# EUROPÄISCHE PATENTSCHRIFT

(11) **EP 1 064 589 B1**
(45) Veröffentlichungstag und Bekanntmachung des Hinweises auf die Patenterteilung: **14.05.2003**
(21) Anmeldenummer: 99916795.0
(22) Anmeldetag: 15.03.1999
(51) Int. Cl.: G05B 19/042, G05B 19/418

(54) **VERFAHREN ZUR SYNCHRONISATION EINER LOKALEN AUF EINE ZENTRALE ZEITBASIS, UND VORRICHTUNG ZUR DURCHFÜHRUNG DES VERFAHRENS MIT BEVORZUGEN VERWENDUNGEN**
METHOD FOR SYNCHRONISING A LOCAL TIME BASE ON A CENTRAL TIME BASE AND DEVICE FOR IMPLEMENTING SAID METHOD WITH PREFERRED APPLICATIONS
PROCEDE DE SYNCHRONISATION D'UNE BASE DE TEMPS LOCALE SUR UNE BASE DE TEMPS CENTRALE, DISPOSITIF CORRESPONDANT ET UTILISATIONS PREFEREES

(30) Priorität: 27.03.1998 DE 19813770; 07.04.1998 DE 19815647
(43) Veröffentlichungstag der Anmeldung: 03.01.2001
(73) Patentinhaber: SIEMENS AKTIENGESELLSCHAFT, 80333 München (DE)
(72) Erfinder: KRAUSE, Karl-Heinz, D-90475 Nürnberg (DE); ZEBISCH, Thomas, D-91056 Erlangen (DE)
(86) Internationale Anmeldenummer: DE9900712
(87) Internationale Veröffentlichungsnummer: WO99050722

(56) Entgegenhaltungen:
- DD-A- 289 147
- DE-A- 4 215 380
- DE-A- 19 626 287
- US-A- 5 257 404
- US-A- 5 481 258
- PATENT ABSTRACTS OF JAPAN vol. 095, no. 004, 31. Mai 1995 (1995-05-31) & JP 07 015421 A (FUJI FACOM CORP;OTHERS: 01), 17. Januar 1995 (1995-01-17)
- COUVET D ET AL: "A STATISTICAL CLOCK SYNCHRONIZATION ALGORITHM FOR ANISOTROPIC NETWORKS" PROCEEDINGS OF THE SYMPOSIUM ON RELIABLE DISTRIBUTED SYSTEMS, PISA, SEPT. 30 - OCT. 2, 1991, Nr. SYMP. 10, 30. September 1991 (1991-09-30), Seiten 42-51, XP000266704 INSTITUTE OF ELECTRICAL AND ELECTRONICS ENGINEERSISBN: 0-8186-2260-1
- ZARROS P N ET AL: "STATISTICAL SYNCHRONIZATION AMONG PARTICIPANTS IN REAL-TIME MULTIMEDIA CONFERENCE" PROCEEDINGS OF THE CONFERENCE ON COMPUTER COMMUNICATIONS (INFOCOM), TORONTO, JUNE 12 - 16, 1994, Bd. 2, 12. Juni 1994 (1994-06-12), Seiten 912-919, XP000496550 INSTITUTE OF ELECTRICAL AND ELECTRONICS ENGINEERSISBN: 0-8186-5572-0

## Beschreibung

Die Erfindung betrifft ein Verfahren zur Synchronisation mindestens einer lokalen Zeitbasis in einem lokalen technischen System auf eine zentrale Zeitbasis in einem zentralen technischen System wie es aus Dokument DE-A-4215 380 vorbekannt ist. Die Erfindung betrifft auch eine Vorrichtung zur Durchführung des Verfahrens und bevorzugte Verwendungen der Vorrichtung.

Dabei kann die lokale Zeitbasis dem Zeitzustand in einer lokalen Datenverarbeitungseinrichtung und die zentrale Zeitbasis dem Zeitzustand in einer zentralen Datenverarbeitungseinrichtung entsprechen. Von der zentralen zur lokalen Datenverarbeitungseinrichtung und damit von der zentralen zur lokalen Zeitbasis werden Datensätze übertragen, welche Zeitinformationen und u.U. auch weitere Nutzdaten unterschiedlichster Art enthalten. Diese Datensätze werden nachfolgend kurz als "Zeittelegramme" bezeichnet.

In der lokalen Datenverarbeitungseinrichtung wird die lokale Verarbeitung von Daten in der Regel auf der Grundlage der lokalen Zeitbasis vorgenommen. Diese wird in der jeweiligen lokalen Datenverarbeitungseinrichtung insbesondere mit Hilfe von sogenannten Timerbausteinen gebildet. Dabei handelt es sich meist um Zähler, welche von einem lokalen Taktgeber zyklisch dekrementiert werden und die bei jeder vollständigen Dekrementierung, d.h. bei jedem Nulldurchgang des Zählerinhalts, ein Trigger- oder Zeitgebersignal für die jeweilige lokale Zeitbasis abgeben.

In der Automatisierungstechnik können lokale Datenverarbeitungseinrichtungen zur dezentralen Steuerung von verteilten technischen Betriebsmitteln eingesetzt werden, welche als Bestandteil einer unter Umständen komplexen Produktionseinrichtung z.B. auf die Bearbeitung eines Werkstückes oder die Verarbeitung eines Ausgangsstoffes einwirken. Als eines von vielen möglichen Beispielen für derartige technische Betriebsmittel sollen exemplarisch elektrische Antriebe genannt werden, welche jeweils von einer zugeordneten lokalen Datenverarbeitungseinrichtung, die auch als eine Antriebssteuerung bezeichnet werden kann, mit Daten versorgt werden. Im Beispiel handelt es sich bei diesen Daten weitgehend um Regelgrößen, d.h. insbesondere um Meßwerte, Sollwerte und Stellwerte.

Für die Funktionsfähigkeit der gesamten Produktionseinrichtung, z.B. einer CNC Werkzeugmaschine, ist es nun in aller Regel notwendig, daß deren technische Betriebsmittel koordiniert z.B. auf ein Werkstück oder einen Ausgangsstoff einwirken. Dies setzt wiederum voraus, daß die lokalen Zeitbasen in den lokalen Datenverarbeitungseinrichtungen der technischen Betriebsmittel aufeinander synchronisiert sind. Hierdurch wird sichergestellt, daß z.B. Istwerte von den lokalen Datenverarbeitungseinrichtungen gleichzeitig erfaßt werden bzw. z.B. Stellsignale gleichzeitig an die zugehörigen technischen Betriebsmittel ausgegeben werden. Alle beteiligten lokalen Datenverarbeitungseinrichtungen einer Produktionseinrichtung wirken somit im Moment eines übereinstimmenden Bearbeitungszustandes des jeweiligen Werkstücks bzw. des Ausgangsstoffe meß- und regelungstechnisch darauf ein.

Ferner ist eine regelmäßige, erneute Synchronisation der lokalen Zeitbasen in den lokalen Datenverarbeitungseinrichtungen erforderlich. Die Ursache hierfür liegt in den dazugehörigen lokalen, insbesondere quarzgesteuerten Taktgebern der Timerbausteine. Diese weisen in den verschiedenen lokalen Datenverarbeitungseinrichtungen eine unterschiedliche Exemplarstreuung und somit verschiedenes Langzeitdriftverhalten auf, so daß die lokalen Zeitbasen ohne regelmäßige Synchronisation allmählich auseinander laufen würden.

Für eine Synchronisation der lokalen Zeitbasen können die lokalen Datenverarbeitungseinrichtungen bei einem ersten, bekannten System über eine separate Taktleitung mit einem festen, zentralen Steuertakt versorgt werden. Dieser wird dem Taktgeber für den jeweiligen Timerbaustein direkt zugeführt. Eine derartige Anordnung ist besonders aufwendig, da die separate Taktleitung parallel zu einem in der Regel ohnehin vorhandenen Datenbus zu verlegen ist, welcher die lokalen Datenverarbeitungseinrichtungen mit einer zentralen Datenverarbeitungseinrichtung verbindet.

Für eine Synchronisation von lokalen Zeitbasen in lokalen Datenverarbeitungseinrichtungen können diese auch über einen Datenbus mit einer zentralen Datenverarbeitungseinheit verbunden sein, in der eine zentrale Zeitbasis gebildet und verwaltet wird. Dabei werden bei einem bekannten System dieser Art sogenannte "Takttelegramme" von der zentralen an die lokalen Zeitbasen übertragen und dort zur Synchronisation ausgewertet. Dabei tritt aber der Nachteil auf, daß die Takttelegramme von der zentralen Datenverarbeitungseinheit zeitlich streng äquidistant in den Datenbus eingespeist werden müssen. Diese werden von einer speziellen Auswerteschaltung in einer lokalen Datenverarbeitungseinrichtungen empfangen, insbesondere einer PLL (phase locked loop) Auswerteschaltung. Diese leitet aus dem Empfangsrhythmus der äquidistanten Takttelegramme ein Korrektursignal ab, womit der auf den jeweiligen Timerbaustein einwirkende Taktgeber zum Zwecke der Synchronisation der lokalen Zeitbasis nachgestimmt wird. Eine Synchronisation mit zeitlich streng äquidistanten Takttelegrammen wird auch als eine harte Synchronisation bezeichnet.

Ein wesentlicher Nachteil eines derartigen Systems liegt darin, daß zum Empfang und zur Auswertung der zeitlich streng äquidistanten Takttelegramme in jeder lokalen Datenverarbeitungseinrichtung eine separate Hardware in Form einer Auswerteschaltung erforderlich ist. Ein weiterer Nachteil liegt darin, vielfach die Anforderung der strengen zeitlichen Äquidistanz in der Praxis nicht präzise eingehalten werden kann, z.B. wegen einer besonderen Art der Datenübertragung auf dem jeweiligen Datenbus bzw. wegen z.B. interruptbedingter Bearbeitungsverzögerungen in der zentralen Datenverarbeitungseinheit. Dies führt zu Schwankungen, insbesondere Verzögerungen, in der zeitlichen Abfolge der Takttelegramme, welche auch als Jitter bezeichnet werden. Diese Jitter pflanzen sich u.U. fort bis in die lokalen Zeitbasen und können Äquidistanzschwankungen in unterlagerten Feinregeltakten der jeweiligen lokalen Datenverarbeitungseinrichtung verursachen.

Der Erfindung liegt die Aufgabe zu Grunde, ein Verfahren und eine Vorrichtung zur Synchronisation von lokalen Zeitbasen anzugeben, wobei möglichst kein zusätzlicher Schaltungsaufwand auf der Seite der lokalen Datenverarbeitungseinrichtung erforderlich ist.

Die Aufgabe wird gelöst mit dem in Anspruch 1 angegebenen Verfahren und der in Anspruch 6 angegebene Vorrichtung. Die Lösung umfaßt auch die im Anspruch 9 angegebene bevorzugte Verwendung der Vorrichtung. Die Unteransprüche enthalten weitere, vorteilhafte Ausführungsformen des Verfahrens, der Vorrichtung und der Verwendung der Vorrichtung.

Nach dem erfindungsgemäßen Verfahren wird von der zentralen Zeitbasis der Absendezeitpunkt eines sogenannten "Zeittelegramms" erfaßt und als ein Datenwert in ein folgendes Zeittelegramm eingetragen. Von einer lokalen Zeitbasis wird dann der Empfangszeitpunkt eines Zeittelegramms erfaßt und der Wert des in einem Zeittelegramm enthaltenen Absendezeitpunktes reproduziert. Aus der Differenz zusammengehöriger Absende- und Empfangszeitpunkte von Zeittelegrammen werden schließlich von der lokalen Zeitbasis Meßwerte der Zeitabweichung zwischen lokaler und zentraler Zeitbasis ermittelt. Diese Werte der Zeitabweichungen werden zur Synchronisation der lokalen Zeitbasis ausgewertet.

Die Erfindung beruht darauf, daß die Auswertung des Empfanges von Zeittelegrammen und die Heranziehung von darin enthaltenen Zeitinformationen zur Synchronisierung der lokalen Zeitbasen herangezogen wird. Mit den Zeittelegrammen werden einerseits Zeitstempel übertragen, insbesondere in Form der Absendezeitpunkte von vorangegangenen Zeittelegrammen. Bei der Erfindung müssen aber die Zeittelegramme keinesfalls ausschließlich zur Übertragung von derartigen Zeitinformationen dienen. Vielmehr können die Zeittelegramme darüber hinaus auch beliebige, weitere Nutzdaten enthalten, welche in keiner Weise mit der Synchronisation der Zeitbasen in Verbindung stehen. Der Begriff Zeittelegramm bringt somit zum Ausdruck, daß es sich um ein Datentelegramm handelt, welches auch Zeitinformationen enthält, die von der zentralen Zeitbasis geprägt sind.

Weiterhin ist es durch die erfindungsgemäße Erfassung der tatsächlichen Zeitabweichungen zwischen zentraler und lokaler Zeitbasis mit Hilfe von Zeittelegrammen möglich, das Auftreten von Jittern sowohl auf der Seite der zentralen Zeitbasis, d.h. quasi auf der Sendeseite, als auch auf der Seite der lokalen Zeitbasen, d.h. quasi auf den Empfangsseiten, zu kompensieren. Derartige Jitter können unterschiedlichste Ursachen haben und z.B. auf Übertragungsstörungen zwischen zentraler und lokaler Zeitbasis beruhen, bzw. auf Schwankungen von internen Bearbeitungsdauern in der zentralen bzw. einer lokalen Zeitbasis beruhen, welche durch Softwareprozesse, z.B. Interrupte, bedingt sind. Die erfindungsgemäße Kompensierbarkeit derartiger Schwankungen beruht auf der möglichst genauen Erfassung, Übertragung und Auswertung der Werte des jeweiligen exakten Absendezeitpunktes und des exakten Empfangszeitpunktes eines jeden Zeittelegramms, d.h. auf der Erfassung der damit verbundenen Zeitabweichung, welche wiederum ein Maß für den Unterschied zwischen zentraler und lokaler Zeitbasis sind. Hierdurch wird einer lokalen Zeitbasis ein hochgenauer und robuster, d.h. von Jittern unabhängiger, Zeitmeßwert zugeführt.

Das erfindungsgemäße Verfahren erfordert somit zwar eine regelmäßige Übertragung von Zeittelegrammen, aber keine zeitlich streng äquidistante Übertragung von Takttelegrammen. Die Zeittelegramme sind somit Datentelegramme, welche auch eine, einen exakten Absendezeitpunkt betreffende, Zeitinformation enthalten. Das erfindungsgemäße Synchronisationsverfahren ist ferner so robust, daß sogar in einem Ausnahmefall ein einzelnes Zeittelegramm ausfallen kann, ohne daß die Synchronität der lokalen Zeitbasen gefährdet ist.

Bei einer weiteren, vorteilhaften Ausführung des erfindungsgemäßen Verfahrens werden von der lokalen Zeitbasis Zeitabweichungen mit Hilfe einer Gruppe von Zeittelegrammen ermittelt, welche während einer Beobachtungsperiode übertragen wurden. Aus dem Minimalwert der in einer Beobachtungsperiode erfaßten Zeitabweichungen wird schließlich ein Korrekturwert gebildet und zur Synchronisation verwendet. Bei dieser Ausführung wird auf der Seite einer lokalen Zeitbasis somit zunächst ein Gruppe von Zeittelegrammen ausgewertet und die hieraus abgeleiteten Zeitabweichungen quasi aufgesammelt. Für eine Korrektur wird schließlich nur diejenige Zeitabweichung ausgewählt, welche die günstigsten Eigenschaften aufweist. Dies ist der Minimalwert der Zeitabweichungen, da dieser nämlich mit einem Zeittelegramm verbunden ist, welches in der zurückliegenden Beobachtungsperiode am wenigsten durch Jitter gestört wurde, also dem Idealzustand einer quasi verzögerungsfreien Datenübertragung am nächsten kommt.

Gemäß einer weiteren, vorteilhaften Ausführung des erfindungsgemäßen Verfahrens entspricht ein Korrekturwert dem Ausgangswert eines Regelungsalgorithmus, dem als Sollwert der Wert null und als Istwert der Minimalwert aus den Zeitabweichungen einer Beobachtungsperiode zugeführt wird. Mit dieser Ausführung wird einerseits quasi die "Weichheit" der Aufschaltung von Korrekturwerten auf eine lokale Zeitbasis, d.h. insbesondere die Aufschaltung auf die Timerbausteine einer dazugehörigen lokalen Datenverarbeitungseinheit, weiter erhöht.

Schließlich wird es durch den Einsatz eines Regelungsalgorithmus zur Bestimmung eines Korrekturwertes möglich, das erfindungsgemäße Verfahren nahezu vollständig mit Hilfe von Programmroutinen zur realisieren, welche in der, die jeweilige lokale Zeitbasis aufweisende lokale Datenverarbeitungseinheit ablaufen. Der jeweilige Korrekturwert kann somit rein softwaremäßige bestimmt werden, und muß dann nur noch in den Timerbaustein der lokalen Datenverarbeitungseinheit als ein neuer Startwert geladen werden. Ein derartiger Startwert kann auch als Reload Wert bezeichnet werden. Damit verbunden ist der weitere Vorteil, daß ein bevorzugt quarzgetriebener Taktgeber, welcher den Timerbaustein einer lokalen Datenverarbeitungseinheit dekrementiert, völlig unbeeinflußt bleibt und frei laufen kann. Das erfindungsgemäße Verfahren wirkt somit nicht auf den Taktgeber eines Timerbausteins, sondern auf den Timerbaustein selbst ein. Die Fortschreitung der lokalen Zeitbasis erfolgt somit erfindungsgemäß durch Reprogrammierung eines entsprechend ausgewählten Startwertes für den Timerbaustein. Der Startwert, auch Reloadwert genannt, wird somit dynamisch angepaßt. Ferner ist diese Reprogrammierung taktunabhängig, kann also jederzeit erfolgen, d.h. "on the fly".

Gemäß einer weiteren, vorteilhaften Ausführung der Erfindung wird von einer lokalen Zeitbasis ein Korrekturwert während einer folgenden Beobachtungsperiode verteilt aufgeschaltet. Mit dieser "weichen", d.h. stufenweisen Aufschaltung eines Korrekturwertes, kann eine weitere Reduktion des Einflusses von Jittern auf die Qualität der Synchronisation bewirkt werden. Das erfindungsgemäße Synchronisationsverfahren ist somit hochgenau und kommt ohne separate Taktleitungen aus.

Die durch die erfindungsgemäße Auswertung der Absende- und Empfangszeitpunkte von Zeittelegrammen gewonnenen und mit "Zeitabweichung" bezeichneten Werte sind ein Abbild für die aktuelle Abweichung einer lokalen Zeitbasis von der zentralen Zeitbasis. Sie können somit für eine Korrektur der lokalen Zeitbasis, d.h. für deren Synchronisation, verwendet werden, welche ohne Eingriffe auf zugeordneten lokalen Taktgeber auskommt. Der Wert einer Zeitabweichung wird dabei im wesentlichen bestimmt von zwei Anteilen, wobei der erste Anteil als ein "Driftanteil" und der zweite Anteil als ein "Jitteranteil" angesehen werden kann. Der "Driftanteil" wird verursacht von Abweichungen zwischen zentraler und lokaler Zeitbasis, welche wiederum auf Bauelementetoleranzen insbesondere der meist quarzgetriebenen Taktgeber der jeweiligen Zeitbasis beruhen. Der "Jitteranteil" beruht im wesentlichen auf unterschiedlichen Verarbeitungszeiten insbesondere der Zeittelegramme in der zentralen und der lokalen Zeitbasis, z.B. in den jeweils Datenbusanschaltungen der dazugehörigen zentralen und lokalen Datenverarbeitungseinheiten, und gegebenenfalls zusätzlich auch auf möglicherweise nur geringfügigen Laufzeitunterschieden auf dem Datenbus zwischen den Datenverarbeitungseinheiten.

Die Erfindung, weitere vorteilhafte Ausführungsformen derselben und weitere damit verbundene Vorteile werden desweiteren anhand der in den nachfolgend kurz angeführten Figuren dargestellten Ausführungsbeispiele weiter erläutert. Dabei zeigt
- FIG 1: das Blockschaltbild einer beispielhaften Anordnung, aus einer zentralen und zwei lokalen Datenverarbeitungsvorrichtungen mit einem Datenbus, über den erfindungsgemäß Zeittelegramme übermittelt werden,
- FIG 2: eine beispielhafte, schematische Darstellung in Form eines zweidimensionalen Zeitdiagrammes zur Erläuterung der Wirkungsweise des erfindungsgemäßen Synchronisationsverfahrens,
- FIG 3: einen beispielhaften, schematischen Ablaufplan zur Erläuterung von Bearbeitungsschritten zwischen dem Kommunikations- und Synchronisationsalgorithmus gemäß der vorliegenden Erfindung auf der Seite einer zentralen Datenverarbeitungsvorrichtung,
- FIG 4: einen weiteren beispielhaften, schematischen Ablaufplan zur Erläuterung von Bearbeitungsschritten zwischen dem Kommunikations- und Synchronisationsalgorithmus gemäß der vorliegenden Erfindung auf der Seite einer lokalen Datenverarbeitungsvorrichtung,
- FIG 5: beispielhaft die Bestimmung eines Minimalwertes aus den während einer Beobachtungsperiode erfaßten Zeitabweichungen gemäß einer vorteilhaften Weiterbildung der Erfindung, und
- FIG 6: schematisch eine beispielhafte Ausführung der Erfindung zur Bestimmung und Aufschaltung eines aus den Zeitabweichungen abgeleiteten Korrekturwertes für die lokale Zeitbasis in einer lokalen Datenverarbeitungsvorrichtung.

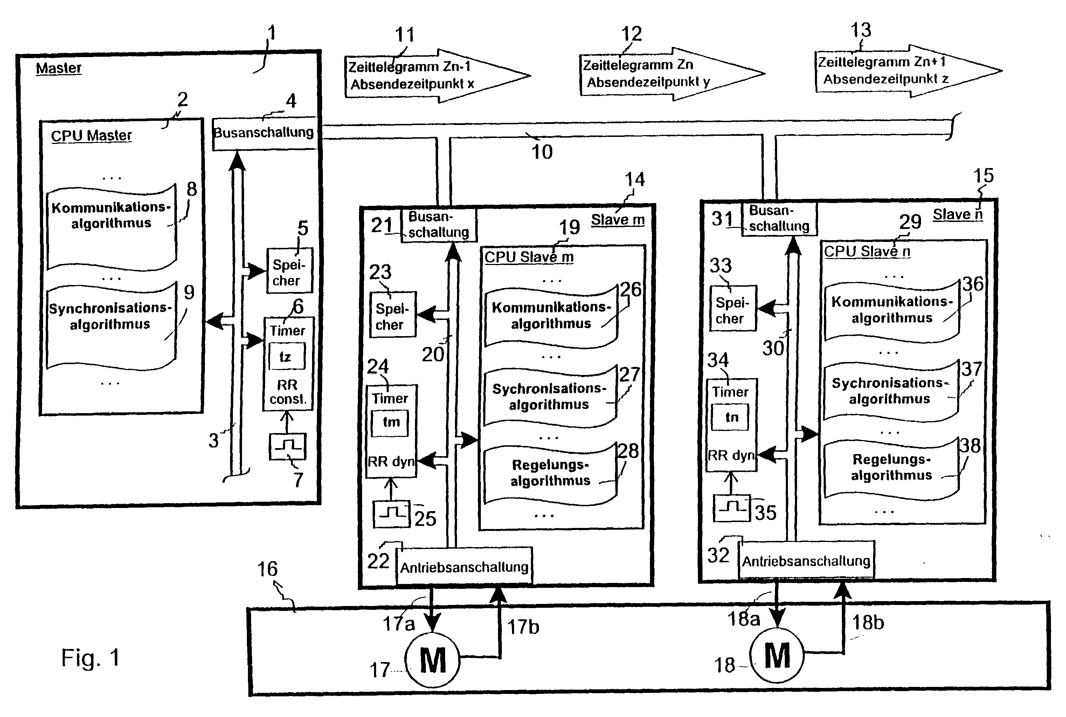

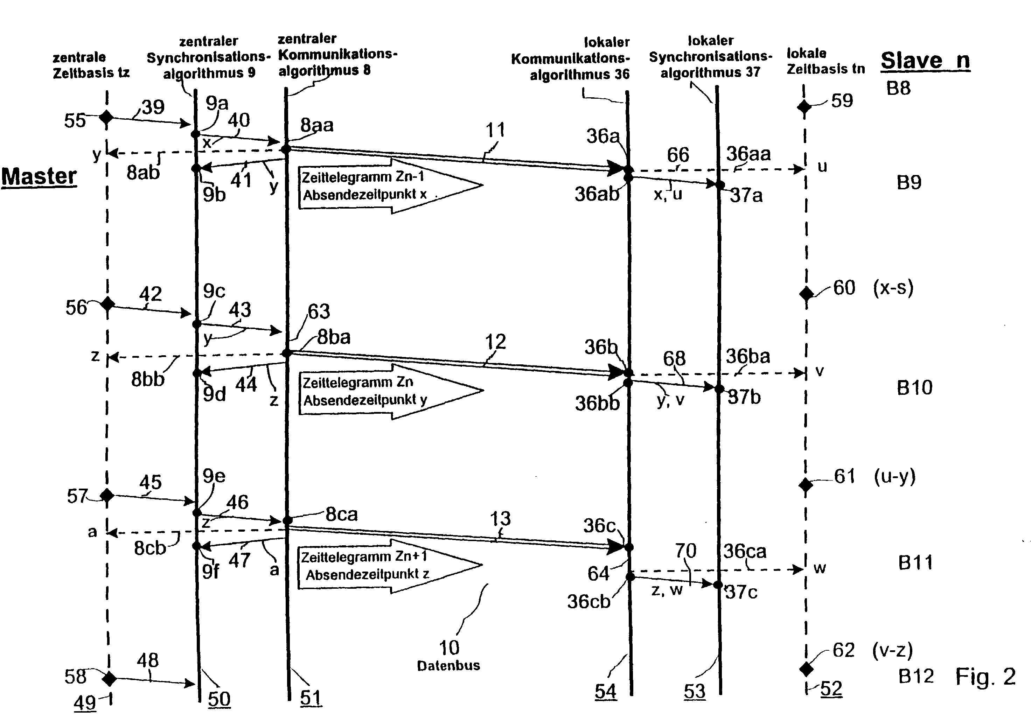

Figur 1 zeigt in Form eines beispielhaften Blockschaltbildes eine vorteilhafte Anordnung, welche zur Durchführung des erfindungsgemäßen Verfahrens geeignete ist. Die Anordnung enthält eine zentrale Datenverarbeitungseinrichtung 1, welche auch als "Master" bezeichnet wird, und beispielhaft zwei lokale Datenverarbeitungseinrichtungen 14 und 15, welche auch als "Slave m" und "Slave n" bezeichnet werden. Alle Datenverarbeitungseinrichtungen sind über einen externen Datenbus 10 miteinander verbunden, über den Datentelegramme mit Zeitinformationen, d.h. Zeittelegramme, von der zentralen an die lokalen Datenverarbeitungseinrichtungen übermittelt werden. Im Beispiel der Figur 1 sind exemplarisch drei aufeinanderfolgende Zeittelegramme 11, 12 und 13 aus einem Strom von regelmäßig aufeinander folgenden Telegrammen gezeigt, welche auch als Zeittelegramm Zn-1, Zn und Zn+1 bezeichnet werden. Jedes Zeittelegramm 11, 12, 13 enthält als eine Dateninformation den Wert des Absendezeitpunktes x, y, z eines vorangegangenen Zeittelegrammes. Wie oben bereits erläutert, können aber auch beliebige andere Nutzdaten enthalten sein, welche nicht mit der Übertragung von Zeitinformation zusammenhängen. Dies wird an Hand der nachfolgenden Figur 2 noch näher erläutert werden.

Die zentrale Datenverarbeitungseinrichtung 1 weist zentrale Mittel zur Bildung einer zentralen Zeitbasis tz auf. Dabei handelt es sich vorteilhaft um einen Timerbaustein 6, der von einem Taktgeber 7 angesteuert und z.B. dekrementiert wird. Pro vollständiger Dekrementierung, d.h. pro Nulldurchgang von dessen Zählerwert, wird vom Timerbaustein 6 ein Zeitbildungssignal für die lokale Zeitbasis tz abgegeben. Anschließend wird der Timerbaustein wieder mit einem konstanten Startwert geladen, welcher mit "RR const." bezeichnet ist. Der Timerbaustein 6 steht über einen internen Datenbus 3 mit weiteren Elementen der zentralen Datenverarbeitungseinrichtung 1 in Verbindung. Im Beispiel der Figur 1 sind eine zentrale Verarbeitungseinheit 2, "CPU Master" genannt, ein Speicher 5 für Daten und eine Busanschaltung 4 vorhanden, worüber der interne Datenbus 3 mit dem externen Datenbus 10 verbunden ist. Die Busanschaltung 4 ist neben einem Kommunikationsalgorithmus 8, welcher von der zentralen Verarbeitungseinheit 2 bearbeitet wird, Bestandteil von zentralen Kommunikationsmitteln. Diese haben die Aufgabe der Einspeisung von Datentelegrammen, insbesondere in Form von Zeittelegrammen, in den zentralen Datenbus 10.

Die Zeittelegramme selbst werden von zentralen Synchronisationsmitteln gebildet, welche im Beispiel der Figur 1 durch einen zentralen Synchronisationsalgorithmus 9 repräsentiert sind, der ebenfalls von der zentralen Verarbeitungseinheit 2 bearbeitet wird. Da der Absendezeitpunkt eines Zeittelegramms in dieses selbst als Datenwert nicht mehr eingetragen werden kann, wird eines der folgenden Zeittelegramme als Träger für diese Zeitinformation verwendet. Bevorzugt wird das unmittelbar folgende Zeittelegramm als Träger verwendet. Bei dem erfindungsgemäßen Verfahren wird somit der Absendezeitpunkt eines eingespeisten Zeittelegramms erfaßt, zwischengespeichert und in ein folgendes Zeittelegramm vor dessen Einspeisung als einen Datenwert eintragen. Bei den in den Figuren 1 bis 6 dargestellten Beispielen wird davon ausgegangen, daß das Zeittelegramm Zn+1 mit dem Bezugszeichen 13 den Absendezeitpunkt z des vorangegangenen Zeittelegrammes Zn mit dem Bezugszeichen 12 als Datenwert, und das Zeittelegramm Zn mit dem Bezugszeichen 12 den Absendezeitpunkt y des vorangegangenen Zeittelegrammes Zn-1 mit dem Bezugszeichen 11 als Datenwert enthält.

Die in Figur 1 beispielhaft dargestellten beiden lokalen Datenverarbeitungseinrichtungen 14 bzw. 15 sind identisch aufgebaut und weisen jeweils lokale Mittel zur Bildung einer lokalen Zeitbasis tm bzw. tn auf. Diese lokalen Mittel weisen bevorzugt jeweils einen Timerbaustein 24 bzw. 34 auf, welcher von einem Taktmittel 25 bzw. 35 zyklisch dekrementiert wird. Pro vollständiger Dekrementierung wird von den Timerbausteinen 24 bzw. 34 ein Zeitbildungssignal für die lokalen Zeitbasen tm bzw. tn abgegeben. Anschließend werden die Timerbausteine wieder mit einem Startwert geladen, welcher mit "RR dyn." bezeichnet ist. Es handelt sich dabei um einen, gemäß einer vorteilhaften Ausführung der Erfindung gebildeten sogenannten "dynamischen Reloadwert", welcher erfindungsgemäß zur Synchronisation der jeweiligen lokalen Zeitbasis unter Verwendung zumindest einer ermittelten Zeitabweichung angepaßt ist. Dies wird nachfolgend noch näher erläutert werden. Die Timerbausteine 25 bzw. 35 stehen über einen internen Datenbus 20 bzw. 30 mit weiteren Elementen der jeweiligen lokalen Datenverarbeitungseinrichtung 14 bzw. 15 in Verbindung. Im Beispiel der Figur 1 sind jeweils eine lokale Verarbeitungseinheit 19 bzw. 29, "CPU Slave m" bzw. "CPU Slave n" genannt, jeweils ein Speicher 23 bzw. 33 für Daten und eine Busanschaltung 21 bzw. 31 vorhanden, worüber der jeweilige interne Datenbus 20 bzw. 30 mit dem externen Datenbus 10 verbunden ist. Die Busanschaltungen 21 bzw. 31 sind neben jeweils einem Kommunikationsalgorithmus 26 bzw. 36, welcher von der jeweiligen lokalen Verarbeitungseinheit 19 bzw. 29 bearbeitet werden, Bestandteil von zentralen Kommunikationsmitteln. Diese haben die Aufgabe der Entgegennahme von Zeittelegrammen aus dem zentralen Datenbus 10.

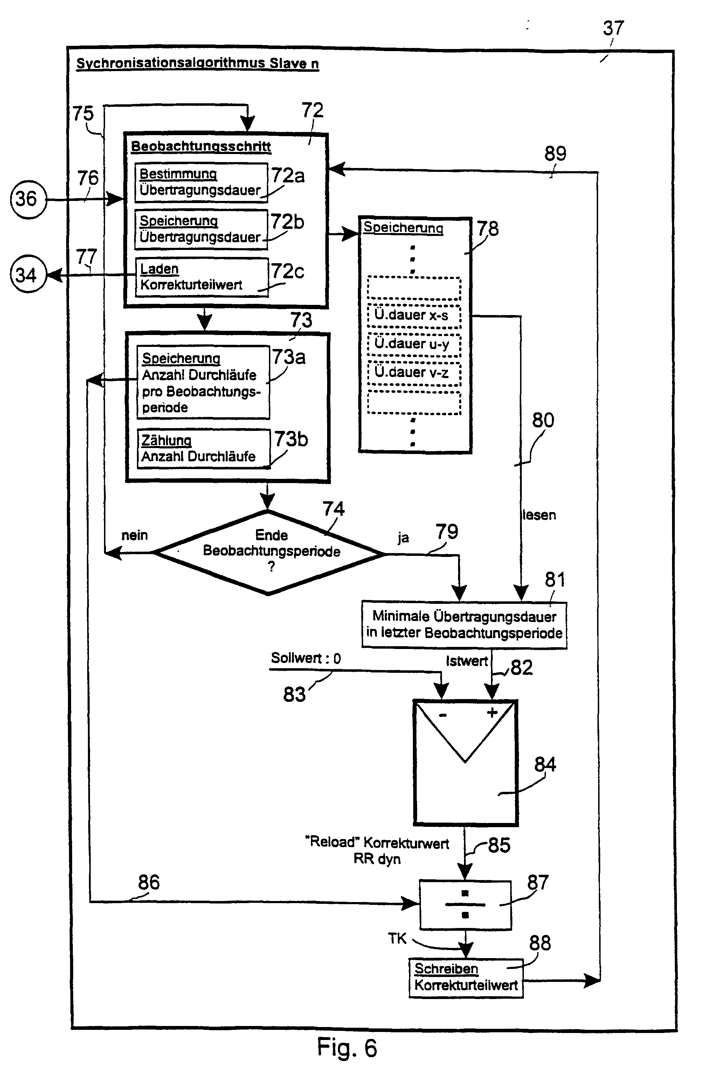

Die Zeittelegramme selbst werden von lokalen Synchronisationsmitteln ausgewertet, welche im Beispiel der Figur 1 durch jeweils einen lokalen Synchronisationsalgorithmus 27 bzw. 37 repräsentiert sind, der ebenfalls von der jeweiligen lokalen Verarbeitungseinheit 2 bearbeitet wird. Erfindungsgemäß werden dabei die tatsächlichen Empfangszeitpunkte von Zeittelegrammen erfaßt, die in den empfangenen Zeittelegrammen als Zeitdatenwerte enthaltenen Absendezeitpunkte von Zeittelegrammen auslesen und die Zeitabweichungen aus zusammengehörigen Absende- und Empfangszeitpunkten von Zeittelegrammen bestimmt. Hieraus werden schließlich Korrekturwerte "RR dyn." für die lokalen Mittel zur Erzeugung der lokalen Zeitbasis tm bzw. tn bestimmt. Dienen wiederum bevorzugt Timerbausteine 24 bzw. 34 als lokale Mittel zur Erzeugung der lokalen Zeitbasis tm bzw. tn, so schalten die lokalen Synchronisationsalgorithmen 27 bzw. 37 dem jeweiligen Timerbaustein als Startwert den Korrekturwert "RR dyn." auf. Dies wird nachfolgend insbesondere am Beispiel der Figur 6 noch näher erläutert werden.

Im Beispiel der Figur 1 verfügen die jeweiligen internen Datenbusse 20 bzw. 30 über eine weitere Busanschaltung, welche als Antriebsanschaltung 22 bzw. 32 bezeichnet ist. Hiermit können Datenverbindungen mit einer beispielhaften technischen Produktionseinrichtung 16 hergestellt werden. In Figur 1 dienen die beiden lokalen Datenverarbeitungseinrichtungen 14 bzw. 15 beispielhaft zum Betrieb von lokalen technischen Betriebsmitteln 17 bzw. 18 in der technischen Produktionseinrichtung 16. Bei den technischen Betriebsmitteln handelt es sich z.B. um elektrische Antriebe 17 bzw. 18. Dabei steuert die lokale Datenverarbeitungseinrichtung 14 bzw. 15 das lokale technische Betriebsmittel 17 bzw. 18 jeweils im Takt der jeweiligen lokalen Zeitbasis tm bzw. tn an. Hierbei werden zwischen lokaler Datenverarbeitungseinrichtung 14 bzw. 15 und dem zugeordneten lokalen technischen Betriebsmittel 17 bzw. 18 bevorzugt Regelgrößen synchron im Takt der jeweiligen lokalen Zeitbasis tm bzw. tn ausgetauscht, insbesondere digitalisierte Ist-, Soll- und/oder Stellwerte 17a, 17b bzw. 18a, 18b. Diese Größen werden in der dezentralen Verarbeitungseinheit 28 bzw. 38 lokalen Datenverarbeitungseinrichtung 14 bzw. 15 verarbeitet. In Figur 1 dient hierzu beispielhaft jeweils ein symbolischer Regelalgorithmus 28 bzw. 38 in der lokalen Verarbeitungseinheit 19 bzw. 29. Sind die lokalen Zeitbasen tm bzw. tn erfindungsgemäß synchronisiert, so erfolgt der Austausch der Regelgrößen bezüglich desselben Ausgangszustandes im Inneren der Produktionseinrichtung 16 und die Regelalgorithmen 28 bzw. 38 vollziehen die jeweiligen Berechnungen auf Basis einer übereinstimmenden Grundlage.

Figur 2 zeigt ein zweidimensionales Zeitdiagramm in einer beispielhaften, schematischen Darstellung. Hiermit wird nachfolgend die Wirkungsweise des erfindungsgemäßen Synchronisationsverfahrens weiter erläutert.

Auf der linken Seite des Zeitdiagrammes befinden sich eine erste Gruppe von drei vertikalen Zeitachsen 49, 50 und 51, welche der zentralen Datenverarbeitungseinrichtung 1 (Master) zugeordnet sind. Dabei zeigt die Zeitachse 49 den Zeitablauf in der zentralen Zeitbasis tz, die Zeitachse 50 Aktionszeitpunkte im zentralen Synchronisationsalgorithmus 9 und die Zeitachse 51 Datenverarbeitungsschritte im zentralen Kommunikationsalgorithmus 8. Auf der rechten Seite des Zeitdiagrammes befinden sich eine zweite Gruppe von drei weiteren vertikalen Zeitachsen 52, 53 und 54, welche einer lokalen Datenverarbeitungseinrichtung zugeordnet sind, im Beispiel der lokalen Datenverarbeitungseinrichtung 15 (Slave n). Dabei zeigt die Zeitachse 52 den Zeitablauf in der lokalen Zeitbasis tn, die Zeitachse 53 Aktionszeitpunkte im lokalen Synchronisationsalgorithmus 37 und die Zeitachse 54 Datenverarbeitungsschritte im lokalen Kommunikationsalgorithmus 36. Zwischen beiden Gruppen von Zeitachsen ist durch schräge, von links nach rechts verlaufende Pfeile 11, 12 und 13 die Übertragung der beispielhaften Zeittelegramme Zn-1, Zn und Zn+1 auf dem Datenbus 10 symbolisiert.

Der Ablauf von Datenverarbeitungsschritten und Aktionszeitpunkten der einzelnen Algorithmen im Beispiel des Zeitdiagrammes von Figur 2 wird nachfolgend im Detail erläutert.

Die mit Rauten gekennzeichneten Zeitpunkte 55, 56, 57 bzw. 58 auf der Zeitachse 49 stellen Zeitmarken der zentralen Zeitbasis tz dar. Diese entsprechen bevorzugt denjenigen Zeitpunkten, bei denen im Beispiel der Figur 1 der Timerbaustein 6 in der zentralen Datenverarbeitungsvorrichtung 15 jeweils mit einem neuen Startwert geladen wird, d.h. einem Reloadwert RR const.. Zur Bildung der zentralen Zeitbasis tz wird der Timerbaustein 6 von einem Taktmittel 7 zyklisch dekrementiert. Nach jeder vollständigen Dekrementierung wird ein Zeitbildungssignal für die zentrale Zeitbasis tz abgeben. Schließlich wird dem Timerbaustein 6 ein neuer Startwert RR const. aufgeschaltet. Gleichzeitig wird in jedem der Zeitpunkte 55, 56, 57 bzw. 58 der zentrale Synchronisationsalgorithmus 9 aufgerufen, was in Figur 2 durch schräge, von links nach rechts verlaufende Pfeile 39, 42, 45 bzw. 48 symbolisiert ist. Diese verzweigen auf Aktionszeitpunkte 9a, 9c bzw. 9e des Synchronalgorithmus. Der zum Pfeil 48 gehörige Aktionszeitpunkt ist aus Gründen der besseren Übersicht am unteren Rand der Figur 2 nicht mehr dargestellt.

In den Aktionszeitpunkte 9a, 9c bzw. 9e wird der zwischen gespeicherte Absendezeitpunkt x, y bzw. z des zuletzt abgesendeten Zeittelegrammes aktiviert und dem zentralen Kommunikationsalgorithmus 8 übergeben. Diese ist wiederum durch schräge, von links nach rechts verlaufende Pfeile 40, 43 bzw. 46 symbolisiert. Dieser trägt den jeweiligen Absendezeitpunkt x, y bzw. z in einem Datenverarbeitungsschritt 8aa, 8ba bzw. 8ca in ein Zeittelegramm Zn-1, Zn bzw. Zn+1 ein, welches dann in den Datenbus 10 eingespeist wird. Bevorzugt nach Abschluß der jeweiligen Einspeisung wird in einem weiteren Datenverarbeitungsschritt 8ab, 8bb bzw. 8cb der tatsächliche Absendezeitpunkt y, z bzw. a des gerade abgesendeten Zeittelegrammes Zn-1, Zn bzw. Zn+1 bezogen auf die Zeitachse 49 der zentralen Zeitbasis tz erfaßt und dem zentralen Synchronisationsalgorithmus 9 übergeben. Dies ist durch schräge, von rechts nach links verlaufende Pfeile 41, 44 bzw. 47 symbolisiert, welche auf entsprechende Aktionszeitpunkte 9b, 9d bzw. 9f auf der Zeitachse 50 des zentralen Synchronisationsalgorithmus 9 verzweigen. Dort werden die Meßwerte der tatsächlichen Absendezeitpunkte y, z bzw. a gespeichert, um ab dem durch die Zeitmarke 56, 57 bzw. 58 auf der Zeitachse 49 der zentralen Zeitbasis tz markierten jeweiligen Zeitpunkt als Datenwert des jeweils folgenden Zeittelegrammes Zn, Zn+1 ... berücksichtigt werden zu können.

Die in den Datenbus 10 eingespeisten Zeittelegramme 11, 12 bzw. 13 werden im Beispiel der Figur 2 vom lokalen Kommunikationsalgorithmus 36 der lokalen Datenverarbeitungseinrichtung 15 (Slave n) in Aktionszeitpunkten 36a, 36b bzw. 36c entgegengenommen. Bevorzugt nach Abschluß des jeweiligen Datenempfangs wird in einem weiteren Datenverarbeitungsschritt 36aa, 36ba bzw. 36ca der tatsächliche Empfangszeitpunkt u, v bzw. w des gerade entgegengenommenen Zeittelegrammes Zn-1, Zn bzw. Zn+1 bezogen auf die Zeitachse 52 der lokalen Zeitbasis tn erfaßt und der im jeweiligen Zeittelegramm als ein Datenwert enthaltene Absendezeitpunkt x, y bzw. z rekonstruiert. Beide Werte, d.h. der Absendezeitpunkte des vorangegangenen Zeittelegrammes und der Empfangszeitpunkt des aktuellen Zeittelegrammes stehen in Datenverarbeitungsschritten 36ab, 36bb bzw. 36cb zur Verfügung. Sie werden paarweise dem lokalen Synchronisationsalgorithmus 37 übergeben, was durch schräge, von links nach rechts verlaufende und mit x,u, y,v bzw. z,w beschriftete Pfeile 66, 68 bzw. 70 symbolisiert ist. Diese verzweigen auf entsprechende Aktionszeitpunkte 37a, 37b bzw. 37c auf der Zeitachse 53 des lokalen Synchronisationsalgorithmus 37. In diesen Aktionszeitpunkten werden erfindungsgemäß quasi als Meßwerte für die Zeitabweichungen aus der Differenz zusammengehöriger Absende- und Empfangszeitpunkte von Zeittelegrammen gebildet. Gemäß bevorzugten Ausführungen der Erfindung wird hieraus ein Korrekturwert bzw. ein in Teilkorrekturwerte aufgeteilter Korrekturwert zur Synchronisation der lokalen Zeitbasis tn abgeleitet.

Ein Korrektur- bzw. Teilkorrekturwert wird bevorzugt in den mit Rauten gekennzeichneten Zeitpunkte 59, 60, 61 bzw. 62 auf der Zeitachse 52 der lokalen Zeitbasis tn aktiv bzw. zum Zwecke der Synchronisation berücksichtigt. Im Beispiel der Figur 2 sind neben den Zeitpunkten 60, 61 bzw. 62 symbolisch die dazugehörigen Zeitabweichungen (x-s), (u-y) bzw. (v-z) angegeben, welche als Grundlage für eine Synchronisation ausgewertet werden.

Im Beispiel der Figur 2 sind ferner beispielhaft ein sogenannter Jitter 63 auf der Sendeseite, und ein sogenannter Jitter 64 auf der Empfangsseite dargestellt. Es handelt sich dabei um Zeitverzögerungen, welche durch unregelmäßige und nicht vorhersehbare Verzögerungen bei der Befehlsverarbeitung auf der Sendeseite, d.h. in der Verarbeitungseinheit 2 der zentralen Datenverarbeitungsvorrichtung 1, bzw. auf der Empfangsseite, d.h. z.B. in der Verarbeitungseinheit 29 der lokalen Datenverarbeitungsvorrichtung 15, auftreten. Im Beispiel der Figur 2 wird durch den Jitter 63 der Datenverarbeitungsschritt 8ba verzögert, d.h. die Absendung des Zeittelegrammes Zn, während die Absendung der Zeittelegramme Zn-1 und Zn+1 in den vergleichbaren Datenverarbeitungsschritten 8aa und 8ca auf der Zeitachse 51 des zentralen Kommunikationsalgorithmus 8 nahezu verzögerungsfrei erfolgt. Weiterhin wird durch den Jitter 64 der Datenverarbeitungsschritt 36cb verzögert, d.h. der Empfang des Zeittelegrammes Zn+1, während der Empfang der Zeittelegramme Zn-1 und Zn in den vergleichbaren Datenverarbeitungsschritten 36ab und 36bb auf der Zeitachse 54 des lokalen Kommunikationsalgorithmus 36 nahezu verzögerungsfrei erfolgt. Der Vorteil der Erfindung besteht darin, daß derartige sporadische Verzögerungen nahezu keinen Einfluß auf die Qualität der Synchronisation der Zeitbasen in lokalen Datenverarbeitungsvorrichtungen haben, d.h. der aktuelle Wert eines Jitters durch den Meßwert einer Zeitabweichung erfaßt und bei der Synchronisation mit berücksichtigt wird.

Bei einer vorteilhaften Ausführung der Erfindung, welche im Beispiel der Figur 1 bereits dargestellt ist, kann die lokale Datenverarbeitungsvorrichtung 15 lokale Mittel zur Bildung der lokalen Zeitbasis tn mit jeweils einem Timerbaustein 34 aufweisen, welcher von einem Taktmittel 35 zyklisch dekrementiert wird. Nach jeder vollständigen Dekrementierung wird ein Zeitbildungssignal für die lokale Zeitbasis tn abgeben. Schließlich schalten die lokalen Synchronisationsmittel 37 dem jeweiligen Timerbaustein 34 als neuen Startwert einen, unter Berücksichtigung gemessener Zeitabweichungen gebildeten Korrekturwert RR dyn auf, womit die gewünschte Synchronisation der lokalen Zeitbasis tn an die zentrale Zeitbasis tz bewirkt wird. Die Zeitpunkte 60, 61 bzw. 62 in Figur 2 können somit denjenigen entsprechen, bei denen im Beispiel der Figur 1 der Timerbaustein 34 jeweils mit einem neuen Startwert geladen wird, d.h. einem Reloadwert RR dyn.. Dabei ist dieser Startwert nicht konstant, sondern wird zur Synchronisation der dazugehörigen Zeitbasis tn unter Auswertung der erfaßten Zeitabweichungen dynamisch angepaßt. Eine vorteilhafte Ausführung für eine derartige dynamische Anpassung wird nachfolgend am Beispiel der Figur 6 noch näher beschrieben werden.

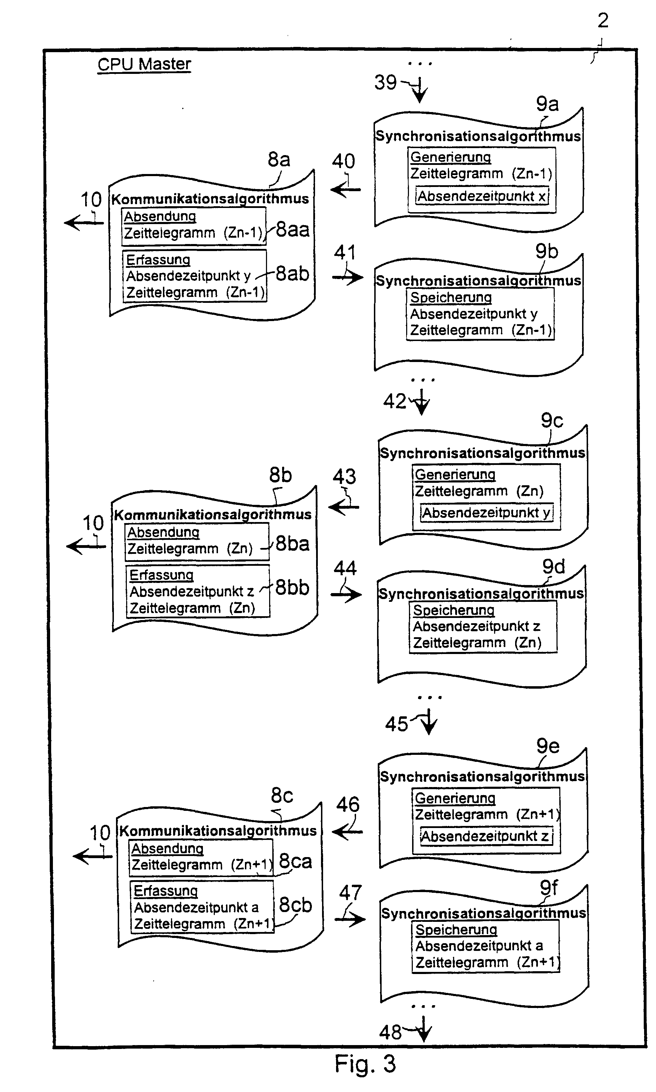

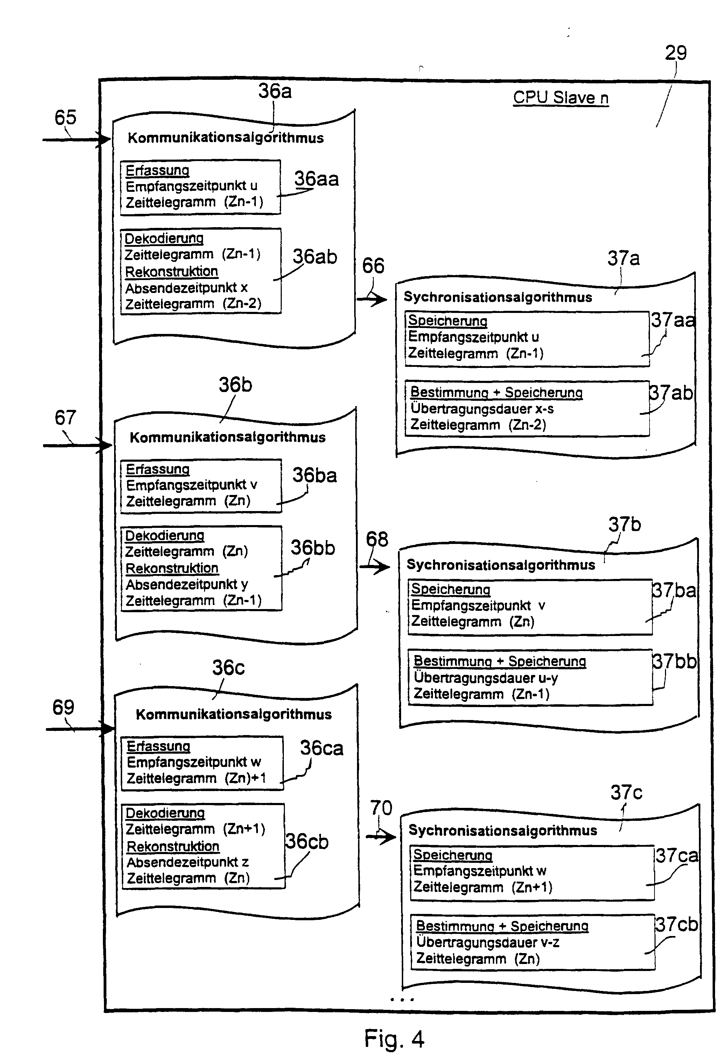

Die Figuren 3 bzw. 4 zeigen beispielhafte, schematische Ablaufpläne der zwischen einem zusammengehörigen Kommunikations- und Synchronisationsalgorithmus in einer Datenverarbeitungsvorrichtung gemäß der Erfindung auftretenden Bearbeitungsschritten. Die Darstellungen in den Figuren dienen zur weiteren Erläuterung des Zeitdiagrammes von Figur 2. Dabei zeigt Figur 3 einen Ausschnitt aus den gemäß der vorliegenden Erfindung zyklisch aufeinanderfolgend auftretenden Bearbeitungsschritten zwischen dem zentralen Synchronisationsalgorithmus 9 und dem zentralen Kommunikationsalgorithmus 8 auf der Seite der zentralen Datenverarbeitungsvorrichtung 2, d.h. in der Verarbeitungseinheit "CPU Master" von Figur 2. Ferner zeigt Figur 4 einen Ausschnitt aus den gemäß der vorliegenden Erfindung zyklisch aufeinanderfolgend auftretenden Bearbeitungsschritten zwischen dem lokalen Kommunikationsalgorithmus 36 und dem lokalen Synchronisationsalgorithmus 37 auf der Seite der lokalen Datenverarbeitungsvorrichtung 15, d.h. in der Verarbeitungseinheit "CPU Slave n" von Figur 2.

Im Beispiel der Figur 3 wird von dem Bearbeitungsschritt 39 der zentrale Synchronisationsalgorithmus 9 im Aktionszeitpunkt 9a gestartet, so daß dieser ein neues Zeittelegramm Zn-1 generiert und in dieses den zwischengespeicherten Absendezeitpunkt x als einen Datenwert einträgt. Mit dem folgenden Bearbeitungsschritt 40 wird der zentrale Kommunikationsalgorithmus 8 im Aktionszeitpunkt 8a gestartet. Dieser bewirkt die Absendung des Zeittelegrammes Zn-1 im Verarbeitungsschritt 8aa in den Datenbus 10, und die Erfassung von dessen Absendezeitpunkt y im folgenden Verarbeitungsschritt 8ab. Mit dem folgenden Bearbeitungsschritt 41 wird wiederum der zentrale Synchronisationsalgorithmus 9 gestartet. Dieser nimmt den erfaßten Absendezeitpunkt y zum Zwecke der Speicherung entgegen. Mit diesem Bearbeitungsschritt ist eine erste Folge von zusammengehörigen Bearbeitungsschritten auf der Seite der zentralen Datenverarbeitungsvorrichtung 2 abgeschlossen. In Figur 3 sind im unteren Bereich analog zum Inhalt von Figur 2 zwei weitere Zyklen von Bearbeitungsschritten dargestellt, welche die Zeittelegramme Zn und Zn+1 betreffen. Diese Abläufe entsprechen der bisher erläuterten Folge von Bearbeitungsschritten, so daß zu deren näheren Beschreibung auf die obigen Ausführungen verwiesen werden kann.

Im Beispiel der Figur 4 wird in einem Bearbeitungsschritt 65 der lokale Kommunikationsalgorithmus 36 im einem Aktionszeitpunkt 36a gestartet. Dieser Start kann durch das Eintreffen eines Zeittelegrammes auf dem Datenbus ausgelöst werden. Der lokale Kommunikationsalgorithmus 36 erfaßt dann in einem Verarbeitungsschritt 36aa sowohl das anstehende Zeittelegramm Zn-1 als auch dessen tatsächlichen Empfangszeitpunkt u. In einem folgenden Verarbeitungsschritt 36ab erfolgt ferner eine Dekodierung und Rekonstruktion des Zeittelegrammes Zn-1 derart, daß zumindest der darin enthaltene Wert des Absendezeitpunktes x eines vorangegangenen Zeittelegrammes Zn-2 zurückgewonnen wird. Mit dem folgenden Bearbeitungsschritt 66 wird der lokalen Synchronisationsalgorithmus 37 im Aktionszeitpunkt 37a gestartet. Dieser speichert zunächst in einem Verarbeitungsschritt 37aa den zum Zeittelegramm Zn-1 gehörigen Empfangszeitpunkt u für eine spätere Verarbeitung. In einem folgenden Verarbeitungsschritt 37ab wird aus zusammengehörigen Absende- und Empfangszeitpunkten eines Zeittelegrammes ein Meßwert für die Zeitabweichung zwischen zentraler und lokaler Zeitbasis bestimmt.

Im dargestellten Beispiel wird aus dem Absendezeitpunkt x und dem zwischengespeicherten Empfangszeitpunkt s des Zeittelegrammes Zn-2 die Zeitabweichung x-s gebildet. Dieses Zeittelegramm wurde im Zeitdiagramm der Figur 2 vor dem Zeittelegramm Zn-1 übertragen, und ist somit am oberen Bildrand aus Gründen der besseren Übersicht nicht mehr gezeigt. Aus dieser Zeitabweichung x-s kann ein Korrekturwert zur Synchronisation der lokalen Zeitbasis tn ermittelt und aktiviert werden. Dies wird nachfolgend noch näher erläutert. Mit diesem Bearbeitungsschritt ist eine erste Folge von zusammengehörigen Bearbeitungsschritten auf der Seite der lokalen Datenverarbeitungsvorrichtung 15 abgeschlossen. In Figur 4 sind ebenfalls im unteren Bereich analog zum Inhalt von Figur 2 zwei weitere Zyklen von Bearbeitungsschritten dargestellt, welche die Bestimmung und Verarbeitung der Zeitabweichungen u-y bzw. v-z unter Auswertung der Zeittelegramme Zn-1 und Zn betreffen. Diese Abläufe entsprechen der bisher erläuterten Folge von Bearbeitungsschritten, so daß zu deren näheren Beschreibung auf die obigen Ausführungen verwiesen werden kann.

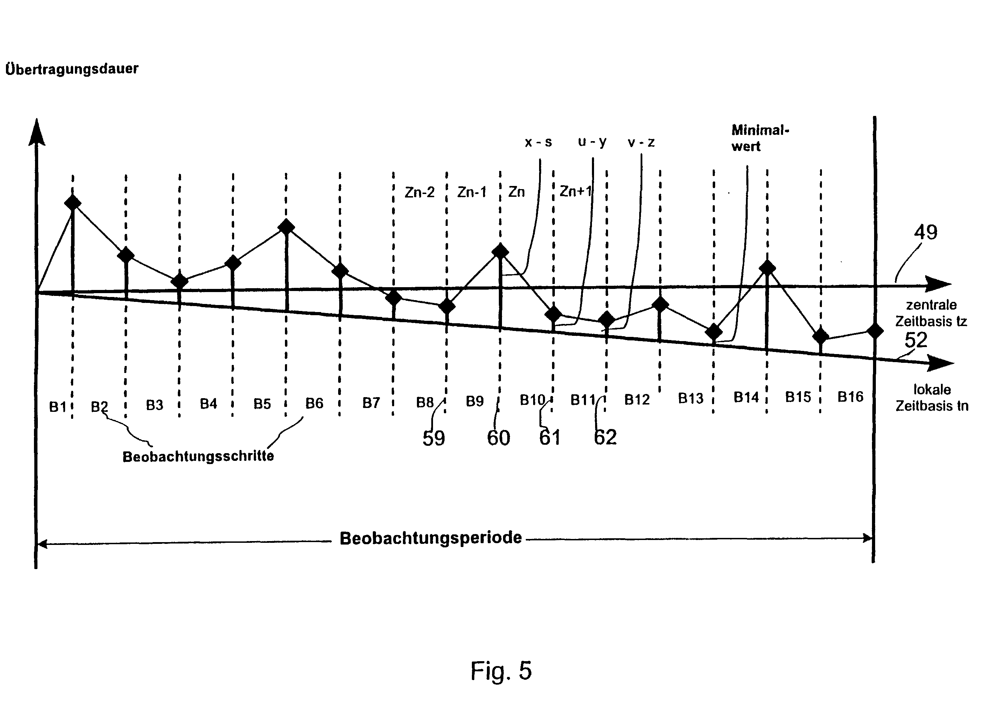

Gemäß einer weiteren, vorteilhaften Ausführung der Erfindung werden von einer lokalen Zeitbasis in einer lokalen Datenverarbeitungsvorrichtung Zeitabweichungen aus den während einer Beobachtungsperiode übertragenen Zeittelegramme ermittelt und gespeichert. Vorteilhaft wird dabei eine vorgegebene Anzahl von Übertragungen von Zeittelegrammen zu einer Beobachtungsperiode zusammengefaßt. Die Übertragung und Auswertung eines Zeittelegrammes aus einer Beobachtungsperiode wird nachfolgend auch als ein Beobachtungsschritt bezeichnet. Aus den kumulierten, in der Beobachtungsperiode erfaßten Zeitabweichungen wird der jeweils aufgetretene Minimalwert ermittelt und hieraus ein Korrekturwert zur Verwendung für die Synchronisation gebildet. Wie oben bereits ausgeführt, ist ein Minimalwert aus einer Gruppe von Zeitabweichungen besonders geeignet zur Bildung eines Korrekturwertes, da die Absendung, die Übertragung und der Empfang damit verbundener Zeittelegramme am wenigsten zeitlich gegenüber der zentralen Zeitbasis versetzt sind. Die wird nachfolgend am Beispiel der Figur 5 weiter erläutert.

Figur 5 zeigt beispielhaft eine Beobachtungsperiode, welche 15 Beobachtungsschritte B1 bis B16 aufweist. In Figur 5 sind zwei Zeitachsen eingetragen, d.h. eine erste Zeitachse 49 für die zentrale Zeitbasis tz und eine zweite Zeitachse 52 für die lokale Zeitbasis tn. Die Schräglage der Zeitachse für tn gegenüber der Zeitachse für tz zeigt die Abweichung, d.h. die Drift, der lokalen Zeitbasis gegenüber der zentralen Zeitbasis, welcher deren regelmäßige Synchronisation erforderlich macht. Die Zeitachsen 49,52 in Figur 5 entsprechen denen von Figur 2. Ferner entsprechen die jeweils mit einer Raute gekennzeichneten Zeitmarken am Ende eines jeden Beobachtungsschrittes in Figur 5 den Zeitmarken auf der rechten, vertikalen Zeitachse 49 von Figur 2. Dies ist in Figur 5 durch die Bezugszeichen 59, 60, 61 und 62 kenntlich gemacht. So wird beispielsweise während der Beobachtungsperiode B8, B9, B10 bzw. B11 das Zeittelegramm Zn-2, Zn-1, Zn bzw. Zn+1 übertragen. Folglich steht am Ende z.B. des Beobachtungsschrittes B9, B10 bzw. B11, d.h. bei den Zeitmarken 60, 61 bzw. 62, jeweils der Wert der Zeitabweichung x-s, u-y bzw. v-z zur Verfügung, welcher durch Auswertung des Zeittelegrammes Zn-2, Zn-1 bzw. Zn gewonnen wurde. Im Beispiel der Figur 5 tritt der Minimalwert der Zeitabweichungen der dargestellten Beobachtungsperiode beispielsweise am Ende des Beobachtungsschrittes B13 auf. Dessen vorteilhafte Weiterverarbeitung zu einem Korrekturwert für die Synchronisation wird am Beispiel der Figur 6 weiter erläutert.

Figur 6 zeigt schematisch eine beispielhafte Ausführung für einen lokalen Synchronisationsalgorithmus in einer lokalen Datenverarbeitungsvorrichtung in Form eines Blockschaltbildes. Eine solche ermöglicht die Bestimmung und Aufschaltung eines Korrekturwertes für die lokale Zeitbasis unter Verwendung des Minimalwertes aus den Zeitabweichungen der innerhalb einer Beobachtungsperiode übermittelten und ausgewerteten Zeittelegramme. In der Darstellung von Figur 6 wird dabei zum besseren Verständnis Bezug genommen auf das Blockschaltbild von Figur 1 und den lokalen Synchronisationsalgorithmus 37, welcher in der dortigen lokalen Datenverarbeitungsvorrichtung 15 "Slave n" enthalten ist.

Dabei betreffen die in den Blöcken 72, 73 und 74 von Figur 6 symbolisch dargestellten Verarbeitungsschritte des Synchronisationsalgorithmus 37 einen Beobachtungsschritt in einer Beobachtungsperiode und werden bei jedem Beobachtungsschritt der Beobachtungsperiode erneut durchlaufen.

In Block 72 dient ein erster Verarbeitungsschritt 72a zur Bestimmung des Wertes einer Zeitabweichung, wobei über eine Abfrage 76 vom zugehörigen Kommunikationsalgorithmus 36 der mit dem aktuellen Zeittelegramm übertragene Absendezeitpunkt eines vorangegangenen Zeittelegrammes abgefragt und durch Differenzbildung mit dem gespeicherten, dazugehörigen Empfangszeitpunkt zum Wert einer Zeitabweichung verarbeitet wird. Ein folgender Verarbeitungsschritt 72b dient zu dessen Speicherung. Hierzu ist in Figur 6 symbolisch ein Speicherbereich 78 dargestellt, in dessen Zellen die bereits erläuterten Zeitabweichungen x-s, u-y, v-z beispielhaft eingetragen sind. Der weitere Verarbeitungsschritt 72c, welcher die Aufgabe hat, einen Teilkorrekturwert zu laden, wird nachfolgend noch erläutert werden.

Es schließt sich ein Block 73 mit den Verarbeitungsschritten 73a und 73b an. Dabei hat der Verarbeitungsschritt 73a die Aufgabe der Speicherung eines Vorgabewertes, nämlich der Anzahl der Beobachtungsschritte pro Beobachtungsperiode, welche auch der Anzahl der Durchläufe des Synchronisationsalgorithmus 37 durch die Blöcke 72, 73 und 74 entspricht. Im folgenden Verarbeitungsschritt 73b erfolgt eine Zählung der bereits erfolgten Durchläufe durch diese Blöcke. In der folgenden Programmverzweigung 74 wird durch Vergleich des Vorgabewertes aus 73a mit dem aktuellen Zählwert aus 73b festgestellt, ob alle Beobachtungsschritte einer Beobachtungsperiode bearbeitet worden sind und somit das Ende der Beobachtungsperiode erreicht ist, oder ob noch Beobachtungsschritte zu verarbeiten sind. Im ersten Fall wird die Verarbeitungsschleife aus den Blöcken 72, 73 und 74 verlassen über den Verzweig 79 auf den Block 81 übergegangen, während im zweiten Fall über den Verzweig 75 an den Anfang der Verarbeitungsschleife zurückgesprungen wird und die Bearbeitung der Blöcke 72, 73 und 74 für eine folgenden Beobachtungsschritt wiederholt wird.

Nach Bearbeitung aller Beobachtungsschritte einer Beobachtungsperiode wird im Block 81 der aktuelle Wert der minimalen Zeitabweichung in der letzten Beobachtungsperiode bestimmt, in dem auf die im Speicherbereich 78 enthaltenen Werte zurückgegriffen wird. Gemäß einer besonders vorteilhaften, im Beispiel der Figur 6 bereits dargestellten Ausführung der Erfindung kann dieser Minimalwert nun mit Hilfe eines Regelungsalgorithmus 84 im lokalen Synchronisationsalgorithmus 37 bis zum eigentlichen Korrekturwert RR dyn weiter verarbeitet werden, welcher als Ausgangswert 85 des Regelungsalgorithmus 84 abgegeben wird. Vorteilhaft enthält der Regelungsalgorithmus 84 einen proportionalen Anteil, und gegebenenfalls zusätzlich auch einen integrierenden bzw. differenzierenden Anteil. Ferner wird dem Regelungsalgorithmus 84 als Sollwert 83 der Wert null und als Istwert 82 der Minimalwert aus den Zeitabweichungen einer vorangegangenen Beobachtungsperiode zugeführt.

Gemäß einer weiteren Ausführung der Erfindung kann ein Korrekturwert, der unter Auswertung der Beobachtungsschritte einer abgeschlossenen Beobachtungsperiode ermittelt wurde, während einer folgenden Beobachtungsperiode verteilt auf eine lokale Zeitbasis aufgeschaltet werden. Vorteilhaft wird hierzu in der betroffenen lokalen Zeitbasis ein Teilkorrekturwert durch Division eines Korrekturwertes durch die vorgegebene Anzahl der pro Beobachtungsperiode übertragenen Zeittelegramme gebildet, und anschließend pro Übertragung eines Zeittelegrammes, d.h. pro Beobachtungsschritt, ein Teilkorrekturwert auf die lokale Zeitbasis zur Synchronisation aufgeschaltet. Der Korrekturwert wird somit nicht in einem Schritt, sondern stufenweise und zeitlich gestreckt aufgeschaltet.

Eine dafür geeignete, vorteilhafte Ausführung ist im Beispiel der Figur 6 ebenfalls bereits dargestellt. Hierzu enthält der lokale Synchronisationsalgorithmus 37 einen Block 87, welcher eine Division des Korrekturwertes RR dyn am Ausgang 85 des Regelungsalgorithmus 84 durch die Anzahl der Beobachtungsschritte vornimmt, welche über die Verzweigung 86 aus dem Verarbeitungsschritt 73a gelesen wurde. Der hierdurch gebildete Teilkorrekturwert TK kann zur Synchronisation der lokalen Zeitbasis pro Übertragung eines Zeittelegrammes auf diese aufgeschaltet werden. Im Beispiel der Figur 6 wird durch den Block 88 im Synchronisationsalgorithmus 37 ein Schreiben des Teilkorrekturwertes TK vorgenommen, in dem dieser über die Verzweigung 89 in den Verarbeitungsschritt 73b des Blockes 72 eingetragen wird. Wird nun die Verarbeitungsschleife aus den Blöcken 72, 73 und 74 zum Zwecke der Bearbeitung der Beobachtungsschritte einer aktuellen Beobachtungsperiode erneut zyklisch durchlaufen, so wird pro Durchlauf ein Teilkorrekturwert auf die lokale Zeitbasis aufgeschaltet. Nach Ablauf der vorgesehenen Anzahl von Durchläufen ist die Summe aller Teilkorrekturwerte, d.h. der gesamte Korrekturwert quasi "weich" aufgeschaltet.

Die Aufschaltung eines Korrekturwertes erfolgt wiederum vorteilhaft unter Einsatz der in Figur 1 beispielhaft dargestellten lokalen Mittel zur Bildung einer lokalen Zeitbasis tn. Diese weisen einen Timerbaustein 34 auf, welcher von einem Taktmittel 35 zyklisch dekrementiert wird und nach vollständiger Dekrementierung eines vorher geladenen Startwertes ein Zeitbildungssignal für die lokale Zeitbasis tn abgibt. Zur Synchronisation schalten die lokalen Synchronisationsmittel, insbesondere der dazugehörige Synchronisationsalgorithmus 37, dem Timerbaustein 34 als neuen Startwert den Korrekturwert RR dyn auf. Ist der Korrekturwert, wie oben beschrieben, in Teilkorrekturwerte TK aufgeteilt, so werden diese dem Timerbaustein 34 in einer folgenden Beobachtungsperiode bevorzugt im Takt des Empfanges von Zeittelegrammen, d.h. pro Beobachtungsschritt, aufgeschaltet. Dies ist im Beispiel der Figur 6 durch eine vom Verarbeitungsschritt 72c abgehende Verzweigung 77 symbolisiert, welche auf den Timerbaustein 34 verzweigt.

## Patentansprüche

1. Verfahren zur Synchronisation mindestens einer lokalen Zeitbasis (tm;tn) in einem lokalen technischen System (14;15) auf eine zentrale Zeitbasis (tz) in einem zentralen technischen System (1), wobei Zeittelegramme (...;Zn-1,11;Zn.12; Zn+1,13;...) von der zentralen Zeitbasis (tz) an die lokale Zeitbasis (tm;tn) übertragen werden, und wobei
a) von der zentralen Zeitbasis (tz) der Absendezeitpunkt (y,z) eines Zeittelegramms (11,12) erfaßt und als ein Datenwert in ein folgendes Zeittelegramm (12,13) eingetragen wird,
b) von der lokalen Zeitbasis (tm)
b1) der Empfangszeitpunkt (u,v) eines Zeittelegramms (11,12) erfaßt und der Wert des in einem folgenden Zeittelegramm (12,13) enthaltenen Absendezeitpunktes (y,z) reproduziert wird,
b2) aus der Differenz zusammengehöriger Absende- und Empfangs Zeitpunkte von Zeittelegrammen (11,12) Zeitabweichungen (u-y,v-z) zwischen lokaler und zentraler Zeitbasis ermittelt werden, und
b3) die Werte der Zeitabweichungen (u-y,v-z) zur Synchronisation der lokalen Zeitbasis (tm) ausgewertet und hieraus Korrekturwerte für die lokale Zeitbasis (tm; tn) bestimmt werden.

2. Verfahren nach Anspruch 1, wobei von der lokalen Zeitbasis (tm;tn)
a) Zeitabweichungen (u-y,v-z) mit Hilfe einer Gruppe von Zeittelegrammen (...,11,12,13,...) ermittelt werden (78), welche während einer Beobachtungsperiode (73,74) übertragen wurden, und
b) aus dem Minimalwert (82) der in einer Beobachtungsperiode (73,74) erfaßten Zeitabweichungen (u-y,v-z) ein Korrekturwert (RR dyn) gebildet (85) und zur Synchronisation verwendet wird.

3. Verfahren nach Anspruch 2, wobei ein Korrekturwert (RR dyn) dem Ausgangswert (85) eines Regelungsalgorithmus (84) entspricht, dem als Sollwert (83) der Wert null und als Istwert (82) der Minimalwert aus den während einer Beobachtungsperiode (73,74) ermittelten Zeitabweichungen (78) zugeführt wird.

4. Verfahren nach Anspruch 2 oder 3, wobei ein Korrekturwert (RR dyn) während einer folgenden Beobachtungsperiode verteilt auf eine lokale Zeitbasis (tm;tn) aufgeschaltet wird (88).

5. Verfahren nach Anspruch 2, 3 oder 4, wobei
a) eine Beobachtungsperiode (73,74) aus einer vorgegebenen Anzahl (73a,73b) von übertragenen Zeittelegrammen (...,11,12,13,...) besteht,
b) ein Teilkorrekturwert (TK) gebildet (88) wird durch Division (87) eines Korrekturwertes (RR dyn) durch die vorgegebene Anzahl (73a,73b) von übertragenen Zeittelegrammen (...,11,12,13,...), und
c) zur Synchronisation pro Übertragung eines Zeittelegrammes ein Teilkorrekturwert (TK) auf die lokale Zeitbasis (tm;tn) aufgeschaltet wird.

6. Vorrichtung zur Durchführung des Verfahrens nach einem der vorangegangenen Ansprüche, mit
a) einer zentralen Datenverarbeitungseinrichtung (1), welche aufweist
a1) zentrale Mittel (6,7) zur Bildung einer zentralen Zeitbasis (tz),
a2) zentrale Kommunikationsmittel (8,4) zur Einspeisung von Zeittelegrammen (...,11,12,13,...) in einen Datenbus (10), und
a3) zentrale Synchronisationsmittel (9), welche den Absendezeitpunkt (y,z) eines eingespeisten Zeittelegramms (11,12) erfassen und in ein folgendes Zeittelegramm (12,13) vor dessen Einspeisung als einen Datenwert eintragen, und mit
b) mindestens einer lokalen Datenverarbeitungseinrichtung (14;15), welche aufweist
b1) lokale Mittel (24,25;34,35) zur Bildung einer lokalen Zeitbasis (tm;tn),
b2) lokale Kommunikationsmittel (26,21;36,31) zum Empfang von Zeittelegrammen (...,11,12,13,...) aus dem Datenbus (10),
b3) lokale Synchronisationsmittel (27;37), welche die Empfangszeitpunkte (u,v) von Zeittelegrammen (11,12) erfassen, die in Zeittelegrammen (12,13) enthaltenen Absendezeitpunkte (y,z) auslesen, Zeitabweichungen (u-y,v-z) zwischen lokaler und zentraler Zeitbasis aus zusammengehörigen Absende- und Empfangszeitpunkten bestimmen und hieraus einen Korrekturwert (RR dyn) für die lokalen Mittel (24,25;34,35) zur Erzeugung der lokalen Zeitbasis (tm,tn) bestimmen.

7. Vorrichtung nach Anspruch 6, wobei
a) die lokalen Mittel (24,25;34,35) zur Bildung einer lokalen Zeitbasis (tm;tn) jeweils einen Timerbaustein (24;34) aufweisen, welcher von einem Taktmittel (25;35) zyklisch dekrementiert wird und nach vollständiger Dekrementierung eines Startwertes (RR) ein Zeitbildungssignal für die lokale Zeitbasis (tm;tn) abgibt, und
b) die lokalen Synchronisationsmittel (27;37) dem jeweiligen Timerbaustein (24;34) als Startwert (RR) den Korrekturwert (RR dyn) aufschalten.

8. Vorrichtung nach Anspruch 6 oder 7, wobei die lokalen Synchronisationsmittel (27;37) den Korrekturwert (RR dyn)
a) aus den in einer Beobachtungsperiode (73,74) empfangenen Zeittelegrammen (...,11,12,13,...) bilden und
b) in Teilkorrekturwerte (TK) aufteilen (86,87), und diese
c) dem Timerbaustein (24;34) in einer folgenden Beobachtungsperiode, bevorzugt im Takt des Empfanges von Zeittelegrammen, aufschalten (88).

9. Verwendung einer Vorrichtung nach einem der vorangegangenen Ansprüche 6 bis 8 zum Betrieb von lokalen technischen Betriebsmitteln (17,18) in einer Produktionseinrichtung (16), wobei den lokalen technischen Betriebsmitteln (17;18) eine lokale Datenverarbeitungseinrichtung (14;15) zugeordnet ist, welche das jeweilige lokale technische Betriebsmittel (17:18) im Takt der jeweiligen lokalen Zeitbasis (tm;tn) ansteuert.

10. Verwendung nach Anspruch 9 bei einer Produktionseinrichtung, welche elektrische Antriebe (17,18) als technische Betriebsmittel aufweist.

11. Verwendung nach Anspruch 9 oder 10 bei einer Produktionseinrichtung, bei der eine lokale Datenverarbeitungseinrichtung (14;15) Regelgrößen (17a,17b;18a,18b), insbesondere Ist-, Soll- und/oder Stellwerte, synchron im Takt der jeweiligen lokalen Zeitbasis (tm,tn) mit dem zugeordneten lokalen technischen Betriebsmittel (17,18) austauscht.

## Claims

1. Method for synchronising at least one local timebase (tm; tn) in a local technical system (14; 15) with a central timebase (tz) in a central technical system (1), time telegrams (...; Zn-1, 11; Zn, 12; Zn+1, 13; ...) being transmitted from the central timebase (tz) to the local timebase (tm; tn), and
a) the origin time point (y, z) of a time telegram (11, 12) being detected by the central timebase (tz) and entered as a data value in a succeeding time telegram (12, 13),
b) from the local timebase (tm)
b1) the reception time point (u, v) of a time telegram (11, 12) being detected and the value of the transmission time point (y, z) contained in a succeeding time telegram (12, 13) being reproduced,
b2) time deviations (u-y, v-z) between local and central timebases being determined from the difference between the associated origin and reception time points of time telegrams (11, 12), and
b3) the values of time deviations (u-y, v-z) being evaluated for synchronisation of the local timebase (tm) and from this correction values being determined for the local timebase (tm; tn).

2. Method according to Claim 1, the local timebase (tm; tn) being used to
a) determine time deviations (u-y, v-z) with the aid of a group of time telegrams (..., 11, 12, 13, ...) (78), which were transmitted during an observation period (73, 74), and
b) generate a correction value (RR dyn) (85) from the minimum value (82) of the time deviations (u-y, v-z) detected in an observation period (73, 74) and used for synchronisation.

3. Method according to Claim 2, whereby a correction value (RR dyn) which corresponds to the starting value (85) of a control algorithm (84), to which as a set value (83) the value zero and as an actual value (82) the minimum value of time deviations (78) determined during an observation period (73, 74) are applied.

4. Method according to Claim 2 or 3, with a correction value (RR dyn) being applied distributed during a succeeding observation period to a local timebase (tm; tn) (88).

5. Method according to Claim 2, 3 or 4, with
a) an observation period (73, 74) consisting of a preset number (73a , 73b) of transmitted time telegrams (..., 11, 12, 13, ...),
b) a part correction value (TK) (88) being formed by division (87) of a correction value (RR dyn) by the preset number (73a, 73b) of transmitted time telegrams (..., 11, 12, 13, ...) and
c) a part correction value (TK) being applied to the local timebase (tm; tn) for synchronisation on each transmission of a time telegram.

6. Device for implementing the method according to one of the preceding claims, with
a) a central data processing system (1), that has
a1) a central means (6, 7) for generation of a central timebase (tz),
a2) central communication means (8, 4) for inputting time telegrams (..., 11, 12, 13, ...) to a data bus (10), and
a3) central synchronisation means (9) that detect the origin time point (y, z) of an input time telegram (11, 12) and enter it in a succeeding time telegram (12, 13) before the latter is input as a data value, and with
b. at least one local data processing system (14; 15), which has
b1) local means (24, 25; 34, 35) for forming a local timebase (tm; tn),
b2) local communication means (26, 21; 36, 31) for receiving time telegrams (..., 11, 12, 13, ...) from the data bus (10),
b3) local synchronisation means (27; 37) which detect the reception time point (u, v) of time telegrams (11, 12), which read the origin time points (y, z) contained in time telegrams (12, 13), determine time deviations (u-y, v-z) between local and central timebases from associated origin and reception time points and from these determine a correction value (RR dyn) for the local means (24, 25; 34, 35) for generation of the local timebase (tm, tn).

7. Device according to Claim 6, with
a) the local means (24, 25; 34, 35) for formation of a local timebase (tm; tn) in each case having a timer module (24; 34), which is cyclically decremented by a clock device (25; 35) and, after complete decrementing of a starting value (RR), outputs a timing generation signal for the local timebase (tm; tn), and
b) the local synchronisation means (27; 37) applying the correction value (RR dyn) to the relevant timer module (24; 34) as a starting value (RR).

8. Device according to Claim 6 or 7, with the local synchronisation means (27; 37)
a) forming the correction value (RR dyn) from the time telegrams (..., 11, 12, 13, ...) received in an observation period (73, 74) and
b) dividing the correction value (RR dyn) into part correction values (TK) (86, 87), and
c) applying these to the timer module (24; 34) in a succeeding observation period, preferably in time with the reception of time telegrams (88).

9. Use of a device according to one of the preceding Claims 6 to 8 for operation of local technical operating means (17, 18) in a production installation (16), with the local technical operating equipment (17; 18) being assigned a local data processing system (14; 15) which controls the relevant local technical operation equipment (17; 18) in time with the relevant local timebase (tm; tn).

10. Use according to Claim 9 in a production facility that has electric drives (17, 18) as technical operating equipment.

11. Use according to Claim 9 or 10 in a production facility, in which a local data processing system (14; 15) exchanges control variables (17a, 17b; 18a, 18b), particularly actual, set and/or correction values, with the assigned local technical operating equipment (17, 18), synchronously in time with the particular local timebase (tm, tn).

## Revendications

1. Procédé pour la synchronisation d'au moins une base de temps locale (tm ; tn) dans un système technique local (14 ; 15) sur une base de temps centrale (tz) dans un système technique central (1), des télégrammes horaires (... ; Zn - 1, 11 ; Zn, 12 ; Zn + 1, 13 ; ...) étant transmis de la base de temps centrale (tz) à la base de temps locale (tm ; tn) et
a) la base de temps centrale (tz) détectant l'instant d'émission (y, z) d'un télégramme horaire (11, 12) et l'enregistrant comme une valeur de données dans un télégramme horaire suivant (12, 13),
b) la base de temps locale (tm)
b1) détectant l'instant de réception (u, v) d'un télégramme horaire (11, 12) et reproduisant la valeur de l'instant d'émission (y, z) contenu dans un télégramme horaire suivant (12, 13),
b2) déterminant à partir de la différence d'instants d'émission et de réception associés de télégrammes horaires (11, 12) des écarts temporels (u - y, v - z) entre la base de temps locale et la base de temps centrale, et
b3) évaluant les valeurs des écarts temporels (u- y, v - z) pour la synchronisation de la base de temps locale (tm) et déterminant à partir de là des valeurs de correction pour la base de temps locale (tm ; tn).

2. Procédé selon la revendication 1, dans lequel la base de temps locale (tm ; tn)
a) détermine (78) des écarts temporels (u - y, v - z) à l'aide d'un groupe de télégrammes horaires (..., 11, 12, 13, ...) qui ont été transmis pendant une période d'observation (73, 74), et
b) forme (85) une valeur de correction (RR dyn) à partir de la valeur minimale (82) des écarts temporels (u - y, v - z) détectés dans une période d'observation (73, 74) et l'utilise pour la synchronisation.

3. Procédé selon la revendication 2, dans lequel une valeur de correction (RR dyn) correspond à la valeur de sortie (85) d'un algorithme de régulation (84) qui reçoit comme valeur de consigne (83) la valeur nulle et comme valeur réelle (82) la valeur minimale parmi les écarts temporels (78) déterminés pendant une période d'observation (73, 74).

4. Procédé selon la revendication 2 ou 3, dans lequel une valeur de correction (RR dyn) est appliquée (88) sur une base de temps locale (tm ; tn) de manière répartie pendant une période d'observation suivante.

5. Procédé selon la revendication 2, 3 ou 4, dans lequel
a) une période d'observation (73, 74) est constituée d'un nombre prédéterminé (73a, 73b) de télégrammes horaires transmis (..., 11, 12, 13, ...),
b) une valeur de correction partielle (TK) est formée (88) par division (87) d'une valeur de correction (RR dyn) par le nombre prédéterminé (73a, 73b) de télégrammes horaires transmis (..., 11, 12, 13, ...), et
c) pour la synchronisation à chaque transmission d'un télégramme horaire, une valeur de correction partielle (TK) est appliquée sur la base de temps locale (tm ; tn).

6. Dispositif pour la mise en oeuvre du procédé selon l'une des revendications précédentes, avec
a) un dispositif de traitement de données central (1) qui comporte
a1) des moyens centraux (6, 7) pour former une base de temps centrale (tz),
a2) des moyens de communication centraux (8, 4) pour introduire des télégrammes horaires (..., 11, 12, 13, ...) dans un bus de données (10), et
a3) des moyens de synchronisation centraux (9) qui détectent l'instant d'émission (y, z) d'un télégramme horaire introduit (11, 12) et qui l'enregistrent comme une valeur de données dans un télégramme horaire suivant (12, 13) avant l'introduction de celui-ci, et
b) au moins un dispositif de traitement de données local (14 ; 15) qui comporte
b1) des moyens locaux (24, 25 ; 34, 35) pour former une base de temps locale (tm ; tn),
b2) des moyens de communication locaux (26, 21 ; 36, 31) pour recevoir des télégrammes horaires (.... 11, 12, 13, ...) provenant du bus de données (10),
b3) des moyens de synchronisation locaux (27 ; 37) qui détectent les instants de réception (u, v) de télégrammes horaires (11, 12), qui lisent les instants d'émission (y, z) contenus dans des télégrammes horaires (12, 13), qui déterminent des écarts temporels (u - y, v - z) entre la base de temps locale et la base de temps centrale à partir des instants d'émission et de réception associés et qui déterminent à partir de là une valeur de correction (RR dyn) pour les moyens locaux (24, 25 ; 34, 35) destinés à produire la base de temps locale (tm, tn).

7. Dispositif selon la revendication 6, dans lequel
a) les moyens locaux (24, 25 ; 34, 35) destinés à former une base de temps locale (tm ; tn) comportent à chaque fois un composant temporisateur (24 ; 34) qui est décrémenté de façon cyclique par un moyen formant horloge (25 ; 35) et qui fournit, après complète décrémentation d'une valeur initiale (RR), un signal de formation de temps pour la base de temps locale (tm ; tn), et
b) les moyens de synchronisation locaux (27 ; 37) appliquent la valeur de correction (RR dyn) comme valeur initiale (RR) au composant temporisateur respectif (24 ; 34).

8. Dispositif selon la revendication 6 ou 7, dans lequel les moyens de synchronisation locaux (27 ; 37)
a) forment la valeur de correction (RR dyn) à partir des télégrammes horaires (..., 11, 12, 13, ...) reçus dans une période d'observation (73, 74), et
b) la divisent (86, 87) en valeurs de correction partielles (TK), et
c) appliquent (88) ces dernières au composant temporisateur (24 ; 34) dans une période d'observation suivante, de préférence selon la cadence de la réception de télégrammes horaires.

9. Utilisation d'un dispositif selon l'une des revendications précédentes 6 à 8 pour faire fonctionner des moyens d'exploitation techniques locaux (17, 18) dans un dispositif de production (16), un dispositif de traitement de données local (14; 15) étant associé aux moyens d'exploitation techniques locaux (17; 18) et commandant le moyen d'exploitation technique local respectif (17 ; 18) avec l'horloge de la base de temps locale respective (tm ; tn).

10. Utilisation selon la revendication 9 dans un dispositif de production qui comporte des dispositifs d'entraînement électriques (17, 18) comme moyens d'exploitation techniques.

11. Utilisation selon la revendication 9 ou 10 dans un dispositif de production dans lequel un dispositif de traitement de données local (14 ; 15) échange avec le moyen d'exploitation technique local associé (17, 18) des grandeurs de régulation (17a, 17b ; 18a, 18b), notamment des valeurs réelles, de consigne et/ou de commande, de manière synchronisée sur l'horloge de la base de temps locale respective (tm, tn).
